# EUROPÄISCHE PATENTANMELDUNG

(11) **EP 0 846 853 A1**
(43) Veröffentlichungstag der Anmeldung: **10.06.1998**
(21) Anmeldenummer: 97121027.3
(22) Anmeldetag: 29.11.1997
(51) Int. Cl.: F02F 11/00, F16J 15/10

(54) **Dichtung für ein Gehäuse**

(30) Priorität: 03.12.1996 DE 19650036
(71) Anmelder: Diehl Remscheid GmbH & Co., D-42857 Remscheid (DE); CC Unternehmensberatung GmbH, 51429 Bergisch-Gladbach (DE)
(72) Erfinder: Haberland, Norbert, Dr., 53881 Euskirchen (DE); Pepping, Karl-Heinz, 53937 Gemünd (DE); Poten, Peter, 53947 Nettersheim (DE); Silva, David, 53947 Nettersheim (DE); Gebhardt, Günther, 54589 Stadtkyll (DE); Froitzheim, Bernd, 51429 Bergisch-Gladbach (DE)
(74) Vertreter: Hofmann, Gerhard, Dipl.-Ing. Patentassessor

(57) **Zusammenfassung**

Eine kostengünstige und wirksame Dichtung gegen Öl und Öldämpfe wird bei Gehäusen (1, 2) mit aufeinander liegenden metallischen Flächen (10, 11) dadurch erreicht, daß eine Dichtung (5) aus einem Elastomer in eine Nut (12) eines Gehäuses (1) eingespritzt wird. Die Dichtung (5) weist einen Dichtungsberg (22) und korrespondierend dazu ein Dichtungstal (20) auf. Die Dichtungskontur ist so ausgelegt, daß die metallischen Flächen (10, 11) bis auf Block verschraubt werden und der Dichtungsberg (22) sich in das Dichtungstal (20) verlagert.

## Beschreibung

Die Erfindung bezieht sich auf eine Dichtung für ein Gehäuse nach dem Oberbegriff des Anspruchs 1.

Bei einer Abdeckhaube für Verbrennungskraftmaschinen nach der DE-A1-23 56 187 ist es zur Dichtung zwischen einer Abdeckhaube und einem Zylinderkopf bekannt, eine Dichtungsmanschette in einer umlaufenden, U-förmigen Nut eines Metallteils mit außenseitigen Stützschenkeln anzuordnen und die Dichtung auf Block zu verschrauben. Damit liegen die metallischen Flächen des Zylinderkopfes und der Stützschenkel aneinander an. Die Dichtungsmanschette ist von Befestigungsschrauben durchsetzt.
Nicht offenbart ist, ob die Dichtungsmanschette in die Nut der Abdeckhaube eingelegt oder in sonstiger Weise in der Nut befestigt ist.

Der Erfindung liegt die Aufgabe zugrunde, eine Dichtung für ein Gehäuse vorzuschlagen, deren Herstellung und Montage kostengünstig ist und die eine große Dichtwirkung besitzt.

Die Erfindung löst diese Aufgabe entsprechend den kennzeichnenden Merkmalen des Anspruch 1.

Vorteilhatte Weiterbildungen der Erfindung sind in den Unteransprüchen angegeben.

Die Kontur der Dichtung ist so ausgelegt, daß die metallischen Flächen bis auf Block verschraubt werden, und die Dichtungsberge sich in die Dichtungstäler verlagern. Damit werden Dichtungszonen bzw. Dichtungslinien mit sehr hohem Anpreßdruck erzeugt. Diese gewährleisten einen großen Dichtungsgrad.

Durch das Verspannen auf Block sind definierte, widerholgenaue Montage- und Dichtzustände erzielbar.

Die Dichtung wird in eine Nut des Gehäuses eingespritzt. Das Elastomer paßt sich allen Unebenheiten der Nut an; demgemäß genügt tur das Einbringen der Dichtung eine unbearbeitete Nut, was einen weiteren Kostenvorteil darstellt.

Mit der Dichtungskontur können auch andere Verschraubungszustände gedichtet werden. Die Kontur paßt sich in der Höhe unterschiedlichen Abstandshaltern an.

Die Dichtung weist aufgrund des großen Flächenverhältnisses von Dichtungsberg zum Dichtungsrumpf von 1 zu 11 ein großes Arbeitsvermögen auf Daraus resultieren mehrere Zonen mit hohen Flächenpressungen an der abzudichtenden Fläche. Hierzu trägt auch die Formgebung der Dichtung bezüglich des Dichtungsberges und des Dichtungstales mit den randseitig zu dem Dichtungsberg und dem Dichtungstal liegenden, flächenbündigen Flächenabschnitten bei. Der Dichtungsrumpf ist dadurch definiert, daß dies der Teil ist ohne den Dichtungsberg. Der feste und ermüdungsfreie Sitz der Dichtung in der Nut ist durch den V-förmigen Querschnitt der Nut, insbesondere auch aufgrund der vertikalen Kopfabschnitte des Dichtungsrumpfes gegeben.

Ausführungsbeispiele der Erfindung sind in den Zeichnungen dargestellt. Es zeigt:
- Fig. 1: ein Gehäuse mit einer eingespritzten Dichtung mit Blick auf die abzudichtende Fläche,
- Fig. 2: einen Schnitt II - II nach Fig. 1,
- Fig. 3: die Dichtung nach Fig. 1 in vergrößerter Darstellung,
- Fig. 4: die Dichtung nach den Fig. 1 bis 3 in ihrer Funktion bei miteinander auf Block verschraubten Gehäusen,
- Fig. 5: die Dichtung nach Fig. 3 bei 2 auf Abstand miteinander verschraubten Gehäusen und
- Fig. 6,7: Querschnittsvarianten zur Dichtung nach Fig. 3.

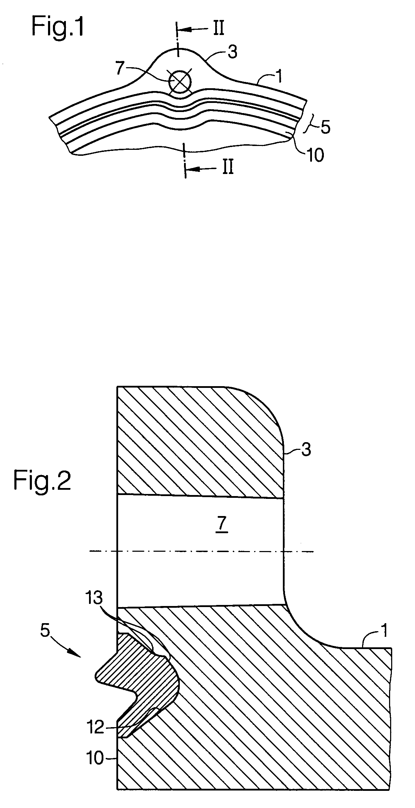

Nach den Figuren 1 und 2 weist ein Gehäuse 1 einen Ansatz 3 mit einer, außerhalb einer Dichtung 5 liegenden Bohrung 7 auf.

In einer Dichtfläche 10 des Gehäuses 1 ist eine Nut 12 eingearbeitet, wobei die Nut aufgrund einer fehlenden Feinbearbeitung Unebenheiten 13 aufweist.

Die Dichtung 5 ist in diese Nut 12 eingespritzt, wobei das eingespritzte Elastomer sich allen Unebenheiten der Nut 12 anpaßt.

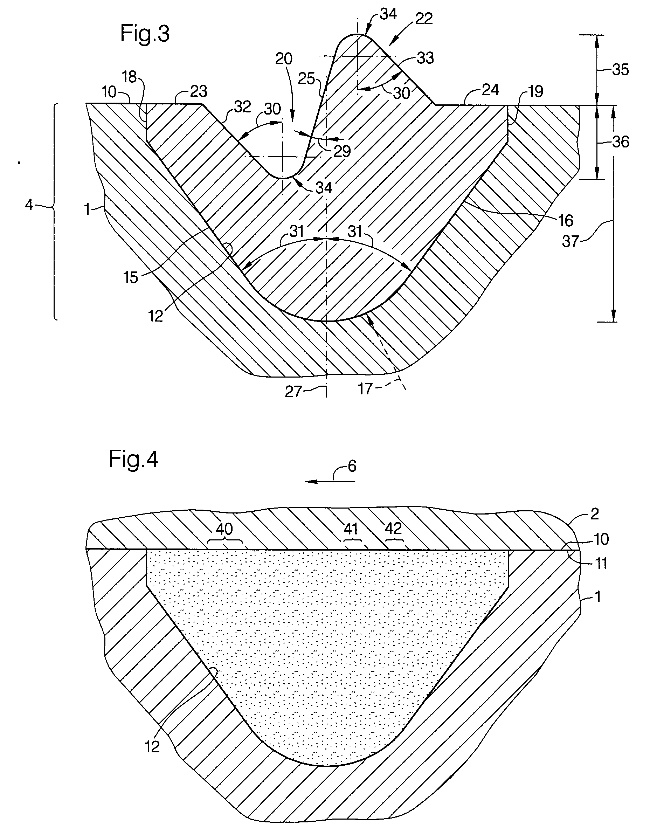

Die Dichtung 5 besteht aus einem Rumpf 4 mit einem Dichtungstal 20 und einem, auf dem Rumpf 4 angeordneten, einstückigen Dichtungsberg 22. Der Rumpf 4 besitzt nach Fig. 3 äußere, V-förmige Flanken 15, 16, die durch einen bodenseitigen Radius 17 miteinander verbunden sind. Diese Flanken 15, 16 werden durch, zur Dichtfläche 10 rechtwinklig stehende, kurze, vertikale Kopfabschnitte 18, 19 begrenzt.

Das Dichtungstal 20 liegt gegenüber der Dichtfläche 10 des Gehäuses 1 vertieft, während der Dichtungsberg gegenüber dieser Dichtfläche 10 erhaben ist. Das Dichtungstal 20 und der Dichtungsberg 22 sind randseitig durch Flächenabschnitte 23, 24 begrenzt, wobei diese in der gleichen Ebene liegen, wie die Dichtfläche 10 des Gehäuses 1.

Die Querschnitte des Dichtungsberges 22 und des Dichtungstales 20 sind gleich groß. Eine gemeinsame Flanke 25 des Dichtungsberges 22 und Dichtungstales 20 weist zu einer Hauptachse 27 der Dichtung 5 bzw. der Nut 12 einen Winkel 29 von 15° auf. Die übrigen Flanken 32, 33 bilden zur Hauptachse 27 jeweils einen Winkel 30 von 45°. Die Flanken 15, 16 der Dichtung 5 schließen zur Hauptachse jeweils einen Winkel 31 von 37,5° ein.

Die Flanken 32, 33 stehen zu den Flächenabschnitten 23, 24 in einem stumpfen Winkel und sind mit der gemeinsamen Flanke 25 über Radien 34 verbunden.

Das Dichtungstal 20 und der Dichtungsberg 22 weisen - ausgehend von der Dichtfläche 10 des Gehäuses 1 - in den Richtungen der Hauptachse 27 jeweils abnehmende Querschnitte auf.

Der Flächenquerschnitt des Dichtungsberges 22 entspricht dem zwölften Teil des Querschnitts der Nut 12 und damit dem elften Teil des Rumpfes 4, also des Elastomerquerschnitts innerhalb der Nut 12. Daraus resultiert ein ermüdungsfreies Arbeitsvermögen der Dichtung beim Verdrängen des Dichtungsberges 22 in das Dichtungstal 20.

Die Höhe 35 des Dichtungsberges 22 entspricht weitgehend der Tiefe 36 des Dichtungstales 20 und beträgt etwa das 3,5-fache der Tiefe 37 der Nut 12.

Nach Fig. 4 sind metallische Flächen 10, 11 zweier Gehäuse 1, 2 auf Block miteinander verschraubt. Der Dichtungsberg 22 ist in das Dichtungstal 20 verlagert. Große Flächenpressungen bestehen in den Abschnitten 40 bis 42. Diese Abschnitte mit großen Flächenpressungen stellen sich reproduzierbar bei wiederholt vorgenommenen Verschraubungen ein.
Die genannten Abschnitte 40 bis 42 verlaufen über die gesamte Länge der Dichtung 5 linienförmig, sodaß sowohl eine Flüssig- als auch eine Gasdichtigkeit vorliegt.

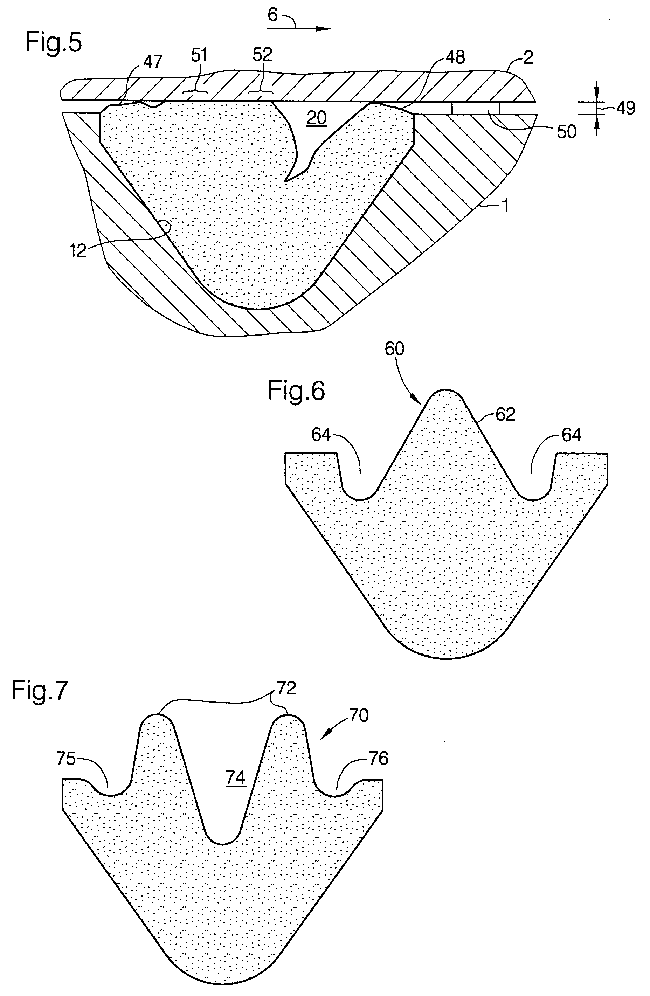

Nach Fig. 5 sind die beiden Gehäuse 1, 2 mit einem Abstandshalter 50 mit einer Dicke 49 versehen. Diese Dicke 49 beträgt etwa ¹/₁₀ der Höhe 35 des Dichtungsberges 22. Der Dichtungsberg 22 ist etwa zu seinem größten Teil in das Dichtungstal 20 verdrängt. Ausbauchungen der Dichtung 5 sind mit 47, 48 bezeichnet. Die Abschnitte 51, 52 stellen die maximalen Flächenpressungen dar.

Nach Fig. 6 liegen bei einer Dichtung 60 zu beiden Seiten eines Dichtungsberges 62 zwei Dichtungstäler 64. Bei aufeinander liegenden Dichtflächen 10, 11 der Gehäuse 1, 2 nehmen die Dichtungstäler 64 den Dichtungsberg 62 auf.

Bei einer Dichtung 70 nach Fig. 7 sind zu beiden Seiten eines großen Dichtungstales 74 zwei kleinere Dichtungsberge 72 vorgesehen, wobei den Dichtungsbergen 72 randseitig zwei, etwa muldenförmige Dichtungstäler 75, 76 benachbart sind.

Die Dichtungen 5, 60, 70 bestehen aus einem spritzbaren, und mit dem Gehäuse 1 durch Vulkanisation verbindbaren Elastomer.

Die Härte der Dichtung beweg sich im üblichen Rahmen, sie beträgt 70 Shore A.

Generell ist die Dichtung 5, Fig. 1 - 5, als asymmetrische Dichtung 5 im Gehäuse 1 so anzuordnen, daß bei der Montage der Gehäuse 1, 2 der Dichtungsberg in Richtung des Pfeiles 4 kippt, also immer der Druckseite entgegen steht. Damit ist die Dichtwirkung sicher gewährleistet.

Bei den symmetrischen Dichtungen 60, 70 besteht keine Einbauempfehlung.

## Patentansprüche

1. Dichtung (5) für Gehäuse (1, 2), einsetzbar für Gehäuseabstände 0-> 0, wobei die Dichtung (5) in einer Nut (12) des Gehäuses (1) liegt und aus einem Elastomer besteht,
dadurch gekennzeichnet,
daß die Dichtung (5) in eine Nut (12) des Gehäuses (1) eingespritzt ist und die Dichtung (5) - im Querschnitt gesehen - wenigstens einen Dichtungsberg (22) und ein Dichtungstal (20) aufweist.

2. Dichtung nach Anspruch 1,
dadurch gekennzeichnet,
daß die Querschnitte des Dichtungsberges (22) und des Dichtungstales (20) etwa gleich groß sind.

3. Dichtung nach Anspruch 1,
dadurch gekennzeichnet,
daß der Dichtungsberg (22) und das Dichtungstal (20) etwa kegelstumpfförmig ausgebildet sind und
ausgehend von der Dichtfläche (10) des Gehäuses (1) in den Richtungen der Hauptachse (27) der Dichtung (5) bzw. der Nut (12) jeweils abnehmende Querschnitte aufweisen.

4. Dichtung nach Anspruch 1,
dadurch gekennzeichnet,
daß das Dichtungstal (20) und der Dichtungsberg (22) eine gemeinsame Flanke (25) besitzen und zur Hauptachse (27) der Dichtung (5) diese Flanke (25) sowie die dazu benachbarten Flanken (32, 33) geneigt sind.

5. Dichtung nach Anspruch 4,
dadurch gekennzeichnet,
daß die Flanken (25, 32, 33, 15, 16) durch Radien (17, 34) miteinander verbunden sind.

6. Dichtung nach Anspruch 1,
dadurch gekennzeichnet,
daß die Dichtung (5) randseitig mit der Dichtfläche (10) des Gehäuses (1) ebene Flächenabschnitte (23, 24) aufweist.

7. Dichtung nach Anspruch 1,
dadurch gekennzeichnet,
daß der Dichtungsberg (22) einen Querschnitt aufweist, der dem achten bis vierzehnten Teil des Querschnitts der Nut (12) entspricht.

8. Dichtung nach Anspruch 4,
dadurch gekennzeichnet,
daß die geneigte Flanke (25) um etwa 10° bis 20° und die randseitigen Flanken (32, 33) um 40° bis 45° zur Hauptachse (27) geneigt sind.

9. Dichtung nach Anspruch 1,
dadurch gekennzeichnet,
daß die Höhe (35) des Dichtungsberges (22) ein mehrfaches der Dicke (49) eines Abstandshalters (50) bzw. das drei- bis vierfache der Tiefe (37) der Nut (12) beträgt.

10. Dichtung nach Anspruch 1,
dadurch gekennzeichnet,
daß zu beiden Seiten eines Dichtungsberges (62) zwei Dichtungstäler (64) liegen.

11. Dichtung nach Anspruch 1,
dadurch gekennzeichnet,
daß zu beiden Seiten eines Dichtungstales (74) zwei abgeplattete Dichtungsberge (72) liegen und
den Dichtungsbergen (72) randseitig zwei kleine, muldenförmige Dichtungstäler (76) zugeordnet sind.

12. Dichtung nach Anspruch 1,
dadurch gekennzeichnet,
daß die äußeren Flanken (15, 16) der Dichtung (5) innerhalb des Gehäuses (1) etwa V-förmig ausgebildet sind, wobei diese Flanken (15, 16) zur Dichtfläche (10) bzw. zu den Abschnitten (23, 24) mit kurzen, zur Dichtfläche (10) rechtwinklig verlaufenden Kopfabschnitten (18, 19) versehen sind.
